# EUROPEAN PATENT SPECIFICATION

(11) **EP 3 174 251 B1**
(45) Date of publication and mention of the grant of the patent: **17.07.2019**
(21) Application number: 16201443.5
(22) Date of filing: 30.11.2016
(51) Int. Cl.: H04L 12/28, H04L 12/10

(54) **METHOD AND APPARATUS FOR IDENTIFYING TYPE OF ELECTRONIC DEVICE ON SMART SOCKET**
VERFAHREN UND VORRICHTUNG ZUR IDENTIFIZIERUNG DES TYPS EINER ELEKTRONISCHEN VORRICHTUNG AN EINER INTELLIGENTEN BUCHSE
PROCÉDÉ ET APPAREIL D'IDENTIFICATION DE TYPE DE DISPOSITIF ÉLECTRONIQUE SUR PRISE INTELLIGENTE

(30) Priority: 30.11.2015 CN 201510860209
(43) Date of publication of application: 31.05.2017
(73) Proprietor: Xiaomi Inc., Beijing 100085 (CN)
(72) Inventor: FU, Qiang, Haidian District, Beijing 100085 (CN); LI, Li, Haidian District, Beijing 100085 (CN); HOU, Enxing, Haidian District, Beijing 100085 (CN)
(74) Representative: Robson, Aidan John

(56) References cited:
- WO-A1-2015/069077
- CN-U- 204 651 612
- GB-A- 2 488 164
- US-A1- 2012 316 808
- US-A1- 2013 132 008

## Description

### TECHNICAL FIELD

The present application generally relates to the field of smart home, and more particularly, to a method and apparatus for identifying a type of an electronic device on a smart socket, a computer program and a recording medium.

### BACKGROUND

With the continuous development of smart home, there are various target electronic devices that can access wireless networks and can be controlled to be on/off by a control device. For more accurate on/off control of various target electronic devices, smart sockets have emerged as a kind of simple and useful smart home devices. A smart socket is a socket having certain communication and processing capabilities. When a smart socket has accessed a wireless network, a user can control the smart socket to be powered on/off remotely using a control device, such as a mobile phone, thereby controlling an operation state of a target electronic device connected to the smart socket. However, since there are various types of electronic devices that may correspond to a number of smart sockets, when controlling a socket to be powered on/off, a user may control another socket corresponding to another electronic device by mistake due to lack of knowledge about the type of the target electronic device corresponding to the smart socket.

US 2013/0132008 A1 of TELECOM ITALIA S.P.A teaches a system for automatic identification of a device or appliance including: at least one sensor associable with the device or appliance to be identified, and able to monitor an evolution in time of an electrical quantity indicative of device or appliance energy consumption; an analyzer communicating with the at least one sensor including receiving reports of the monitored electrical quantity, and automatically identifying the device or appliance by analyzing the evolution in time of the monitored electric quantity. The analyzing calculates a cross-correlation between the evolution in time of the monitored electric quantity and at least one reference pattern representative of at least one sample device or appliance; and when more than one sample device or appliance is included in a candidate list, identifies the device or appliance by performing a selection among the candidates based on characteristic parameters related to the respective calculated cross-correlations.

US 2012/0316808 A1 of ENERGYHUB concerns systems and methods for monitoring and controlling the power consumption of a power-consuming device. The system and method connects to a power source and a power-consuming device, connecting the power-consuming device to the power source. The power usage of the power-consuming device is then measured and monitored. This monitoring data is then stored and optionally sent to a controlling device on a data network. The location of the power-consuming device is also determined, recorded, and sent to a controlling device. The system also controls the power usage of the power-consuming device. In some cases, a remote server connects multiple energy monitoring systems in order to gain additional efficiencies and foster a community-based social network.]

CN 204651612 U of SHENZHEN HUALING TECHNOLOGY CO LTD discloses a smart jack system with monitor control load electrical apparatus, the system includes: the smart jack, it includes: a plurality of electric sockets, every electric socket includes collection module, control module, socket identification code, collection module, control module all concatenate on the power cord of electric socket, with the microprocessor of a plurality of electric socket connections, it includes processing module, storage module, communication module, processing module is connected with collection module and control module respectively, high in the clouds server with smart jack communication connection, intelligent terminal with high in the clouds server communication connection for receive the identifying information and issue control command, realize the on off state and/or the stepping timing of the electric socket of control. This smart jack system can simultaneously carry out intelligent recognition, real -time supervision and control to a plurality of load electrical apparatus that insert, and higher, the intelligent degree height of factor of safety and user experience feel.

### SUMMARY

In order to solve the problems with the related art, the present invention provides a method and apparatus for identifying a type of an electronic device on a smart socket, a computer program and a recording medium.

According to a first aspect of the present invention, a method for identifying a type of an electronic device on a smart socket is provided. The method comprises: obtaining a target power-on state parameter of a target electronic device connected to the smart socket and in a power-on state, wherein the target power-on-state parameter is an electrical power stability parameter which is a function of whether or not power consumption of the target electronic device goes above or below predetermined limits during a specific time; identifying a target type of the target electronic device based on the target power-on state parameter, wherein the target type corresponding to the target power-on state parameter is identified based on a target correspondence table, and the target correspondence table contains correspondences between power-on state parameters and respective electronic device types; and outputting the target type wherein the smart socket has a built-in electrical power meter used to measure power usage of the target electronic device plugged into the smart socket, and wherein said obtaining the electrical power stability parameter of the target electronic device connected to the smart socket and in the power-on state comprises: obtaining, during a predetermined time period, the target electrical power parameter of the target electronic device connected to the smart socket and in the power-on state; and determining the electrical power stability parameter of the target electronic device based on the target electrical power parameter.

The power stability parameter is a function of whether or not power consumption goes above or below predetermined limits during a specific time interval. If it remains within the limits then the parameter determines that the power is stable. If it goes outside those limits then it is determined not to be stable. An improvement on this the parameter may also be dependent on the length of time power consumption goes above or below predetermined limits.

Optionally, said outputting the target type comprises: outputting prompt information for confirming the target type; detecting a confirmation instruction and a modification instruction for the prompt information; outputting the target type in response to detecting the confirmation instruction; and outputting a modified target type in response to detecting the modification instruction.

Optionally, said outputting the target type comprises: outputting the target type via an output component provided in the smart socket, the output component being provided at a position corresponding to a connection position at which the target electronic device is connected to the smart socket.

Optionally, said outputting the target type comprises: outputting the target type via a smart terminal that is a control terminal of the smart socket.

Optionally, said outputting the target type via the smart terminal comprises: controlling the smart terminal to output a correspondence between the target type and the smart socket.

Optionally, said controlling the smart terminal to output the correspondence between the target type and the smart socket comprises at least one of: controlling the smart terminal to output the target type in accordance with a positional rank of the electronic device on the smart socket; controlling the smart terminal to output the target type at a corresponding position on a virtual socket image, which is a virtual image of the smart socket generated by the smart terminal; and controlling the smart terminal to output the target type at a name position corresponding to the smart socket.

According to a second aspect of the present invention, an apparatus for identifying a type of an electronic device on a smart socket is provided. The apparatus comprises: a parameter obtaining unit configured to obtain a target power-on state parameter of a target electronic device connected to the smart socket and in a power-on state wherein the target power on state parameter is an electrical power stability parameter which is a function of whether or not power consumption of the target electronic device goes above or below predetermined limits during a specific time; a type identification unit configured to identify a target type of the target electronic device based on the target power-on state parameter obtained by the parameter obtaining unit wherein the target type corresponding to the target power-on state parameter is identified based on a target correspondence table, and the target correspondence table contains correspondences between power-on state parameters and respective electronic device types; and a type output unit configured to output the target type identified by the type identification unit, wherein the smart socket has a built-in electrical power meter used to measure power usage of the target electronic device plugged into the smart socket, and wherein the parameter obtaining unit comprises: a power parameter obtaining module configured to obtain, during a predetermined time period, the target electrical power parameter of the target electronic device connected to the smart socket and in the power-on state; and a stability parameter determination module configured to determine the electrical power stability parameter of the target electronic device based on the target electrical power parameter obtained by the power parameter obtaining module..

Optionally, the type output unit comprises: an information output sub-unit configured to output prompt information for confirming the target type identified by the type identification unit; an instruction detection sub-unit configured to detect a confirmation instruction and a modification instruction for the prompt information output by the information output sub-unit; a first type output sub-unit configured to output the target type when the confirmation instruction is detected or to output a modified target type when the modification instruction is detected.

Optionally, the type output unit comprises: a second type output sub-unit configured to output the target type identified by the type identification unit via an output component provided in the smart socket, the output component being provided at a position corresponding to a connection position at which the target electronic device is connected to the smart socket.

Optionally, the type output unit comprises: a third type output sub-unit configured to output the target type identified by the type identification unit via a smart terminal that is a control terminal of the smart socket.

Optionally, the third type output sub-unit comprises: a correspondence output module configured to control the smart terminal to output a correspondence between the target type and the smart socket.

Optionally, the correspondence output module comprises at least one of: a first output sub-module configured to control the smart terminal to output the target type in accordance with a positional rank of the electronic device on the smart socket; a second output sub-module configured to control the smart terminal to output the target type at a corresponding position on a virtual socket image, which is a virtual image of the smart socket generated by the smart terminal; and a third output sub-module configured to control the smart terminal to output the target type at a name position corresponding to the smart socket.

According to a third aspect of the present invention, an apparatus for identifying a type of an electronic device on a smart socket is provided. The apparatus comprises: a processor; and a memory storing instructions executable by the processor. The processor is configured to: obtain a target power-on state parameter of a target electronic device connected to the smart socket and in a power-on state; identify a target type of the target electronic device based on the target power-on state parameter; and output the target type.

In one particular embodiment, the steps of the method for identifying a type of an electronic device on a smart socket are determined by computer program instructions.

Consequently, according to a fourth aspect, the invention is also directed to a computer program for executing the steps of a method for identifying a type of an electronic device on a smart socket as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The solutions according to the embodiments of the present invention have the following advantageous effects.

With the present invention, a target power-on state parameter of a target electronic device connected to the smart socket and in a power-on state is obtained. A target type of the target electronic device is identified based on the target power-on state parameter. Then, the target type is outputted. In this way, a user can obtain a correspondence between the smart socket and the target electronic device based on the outputted target type information and control the smart socket connected with the target electronic device based on the correspondence, so as to avoid controlling a socket corresponding to another electronic device by mistake due to lack of knowledge about the correspondence between the target electronic device and the smart socket.

In the present invention, the target power-on state parameter can be one or more of a target electrical power parameter, a target power-on time parameter, a target power-on time length parameter and an electrical power stability parameter. The target type of the target electronic device corresponding to the smart socket can be identified automatically depending on different target power-on state parameters, so as to identify the target electronic device. The accuracy of identification can be improved when various parameters are used in combination for identification.

In the present invention, the target electrical power parameter of the target electronic device connected to the smart socket and in the power-on state can be obtained during a predetermined time period. The electrical power stability parameter of the target electronic device can be determined based on the target electrical power parameter. This is easy to implement.

In the present invention, the target type corresponding to the target power-on state parameter can be determined based on predetermined correspondences between power-on state parameters and respective electronic device types, which is easy to implement.

In the present invention, the target type of the target electronic device corresponding to the smart socket can be further confirmed by means of human-machine interaction. In this way, it is possible to improve the accuracy of the identification and avoid erroneous automatic identification of the target type.

In the present invention, since there are one-to-one correspondences between the positions of the output components and the connection positions, the target type outputted by an output component of the smart socket clearly shows the correspondence between the target type and a receptacle in the smart socket, making it convenient for the user to operate the smart socket.

In the present invention, a smart terminal can output the correspondence between the target type and the smart socket, which clearly shows the correspondence between the target type and a receptacle in the smart socket. This is convenient for the user to control the smart socket using the smart terminal.

In the present invention, the smart terminal can output the target type in accordance with a positional rank of the electronic device on the smart socket. In this way, the correspondence between a receptacle and the target type can be obtained and the user can control the smart socket connected with the target electronic device based on the correspondence, thereby avoiding the case where the plug for the target electronic device cannot be identified when a number of target electronic devices are connected to the socket.

In the present invention, the smart terminal can output the target type at a corresponding position on a virtual socket image. In this way, the correspondence between the target type and a receptacle in the smart socket can be clearly shown, which is convenient for the user to control the smart socket using the smart terminal.

In the present invention, once the type of the target electronic device connected to the smart socket has been identified, the target type can be automatically outputted at a name position corresponding to the smart socket by the smart terminal. In this way, it is possible to name the smart socket with an improved naming efficiency. Meanwhile, it is convenient for the user to distinguish between different electronic devices connected to different smart sockets based on the names.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flowchart illustrating a method for identifying a type of an electronic device on a smart socket according to an exemplary embodiment of the present invention;
Fig. 1B is a schematic diagram showing an application scenario in which a method for identifying a type of an electronic device on a smart socket according to an exemplary embodiment of the present invention can be applied;
Fig. 1C is a schematic diagram showing how to output target types on a smart terminal according to an exemplary embodiment of the present invention;
Fig. 1D is another schematic diagram showing how to output target types on a smart terminal according to an exemplary embodiment of the present invention;
Fig. 1E is a schematic diagram showing how to output target types on a smart socket according to an exemplary embodiment of the present invention;
Fig. 1F is a schematic diagram showing a prompt interface according to an embodiment of the present invention;
Fig. 2 is a block diagram of an apparatus for identifying a type of an electronic device on a smart socket according to an exemplary embodiment of the present invention;
Figs. 3-10 are block diagrams of another apparatus for identifying a type of an electronic device on a smart socket according to an exemplary embodiment of the present invention;
Fig. 11 is a block diagram of an apparatus for identifying a type of an electronic device on a smart socket according to an exemplary embodiment of the present invention; and
Fig. 12 is a block diagram of another apparatus for identifying a type of an electronic device on a smart socket according to an exemplary embodiment of the present invention.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

The terms used herein are for the purpose of illustrating the embodiments only, rather than limiting the present invention. The terms "a", "said" and "the" of singular forms used in the present description and the attached claims are also intended to include their plural forms, unless otherwise clearly specified in the context. It can also be appreciated that the term "and/or" as used herein refers to any or all possible combinations of one or more associated items as listed.

It can be appreciated that, while the terms "first", "second", "third" and so on may be used herein to describe various information, such information is not limited to these terms, which are only used to distinguish between different information of the same category. For example, the first information can also be referred to as the second information, and similarly the second information can also be referred to as the first information, without departing from the scope of the present invention. Depending on the context, the term "if' as used herein can be interpreted as "when", "while", or "in response to determining".

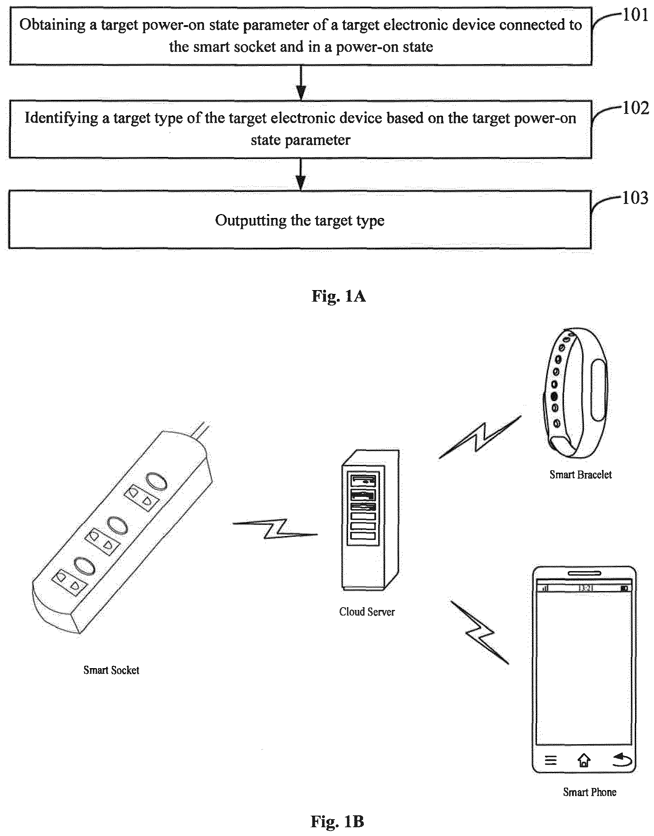

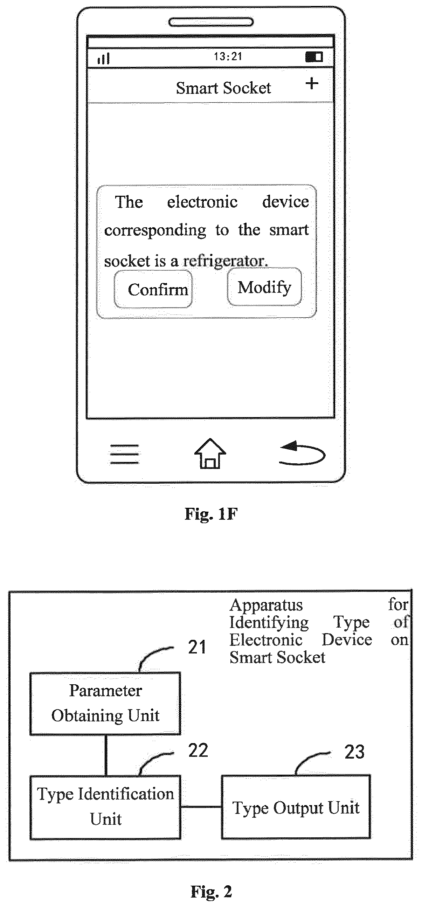

Fig. 1A is a flowchart illustrating a method for identifying a type of an electronic device on a smart socket according to an exemplary embodiment of the present invention. As shown in Fig. 1A, the method includes the following steps.

At step 101, a target power-on state parameter of a target electronic device connected to the smart socket and in a power-on state is obtained.

At step 102, a target type of the target electronic device is identified based on the target power-on state parameter.

At step 103, the target type is outputted.

According to this embodiment, a target power-on state parameter of a target electronic device connected to the smart socket and in a power-on state is obtained. A target type of the target electronic device is identified based on the target power-on state parameter. Then, the target type is outputted. In this way, a user can obtain a correspondence between the smart socket and the target electronic device based on the outputted target type information and control the smart socket connected with the target electronic device based on the correspondence, so as to avoid controlling a socket corresponding to another electronic device by mistake due to lack of knowledge about the correspondence between the target electronic device and the smart socket.

Here, the smart socket involved in the present invention can be a socket with or without a wireless communication module. The socket is a base into which one or more electrical wires can be inserted. It may include one or more receptacles that can be connected to plugs of different target electronic devices for electrically connected with the target electronic devices. When the smart socket has a wireless communication module, it can communicate with a smart terminal which can control the power on/off of the smart socket remotely. The smart terminal in the present invention can be a smart phone, a tablet computer, a Personal Digital Assistant (PDA), a smart bracelet, an e-book reader, or the like.

Here, the smart socket and the smart terminal can communicate with each other directly. For example, the smart socket can serve as an access point and the smart terminal can search for the access point for connection to the smart socket. As another example, the smart terminal can serve as an access point and the smart socket can search for the access point for connection to the smart terminal. Alternatively, the smart socket can communicate with the smart terminal via a server. In this case, the smart socket can transmit information to the server, which can then push the information to the smart terminal for outputting. Fig. 1B is a schematic diagram showing an application scenario in which a method for identifying a type of an electronic device on a smart socket according to an exemplary embodiment of the present invention can be applied. In this scenario, the server can be a cloud server and the smart socket can transmit the target power-on state parameter to the cloud server. The cloud server can push the target type to smart terminals based on the target power-on state parameter, such that the smart terminals, which can be a smart phone, a smart band and the like, can output the target type.

In the scenario where the smart terminal is connected to the smart socket via the server, the method according to the present invention can be used in the server.

On one hand, the server obtains a target power-on state parameter of a target electronic device connected to the smart socket and in a power-on state, identifies a target type of the target electronic device based on the target power-on state parameter, and transmits a correspondence between the target type and the smart socket to the smart terminal, so as to control the smart terminal to output the correspondence between the target type and the smart socket. The smart terminal is a control terminal of the smart socket.

In this embodiment, the server can identify the target electronic device on the smart socket to determine the target type of the target electronic device connected to the smart socket, and then push the correspondence between the target type and the smart socket to smart terminals, so as to control the smart terminals to output the correspondence between the target type and the smart socket. In this way, it is convenient for the user to control the on/off state of the smart socket based on the correspondence via the smart terminals, thereby controlling the power on/off state of the target electronic device. Particularly, when there are a large number of smart terminals and a large number of smart sockets, the server can identify the target electronic devices on the respective smart sockets uniformly and push the identification results to the respective smart terminals for presentation. Thus, uniform identification can be performed, resources can be saved and it is easy to implement.

There are a number of schemes for the server to control a smart terminal to output the correspondence between the target type and the smart socket. Some of the schemes will be explained here.

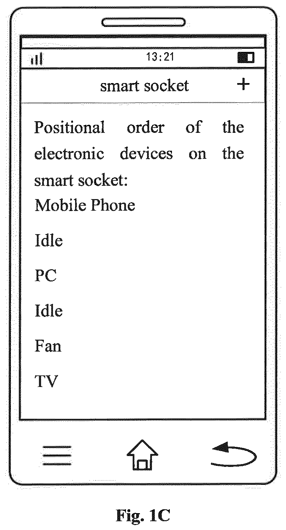

In a first scheme, when there are a number of receptacles in the smart socket, the server can control the smart terminal to output the target type in accordance with a positional rank of the electronic device on the smart socket. It can be appreciated here that, when there is a receptacle in the smart socket that is not connected to any electronic device, "Idle" information can be outputted. Fig. 1C is a schematic diagram showing how to output target types on a smart terminal according to an exemplary embodiment of the present invention. In the example shown in Fig. 1C, "Mobile Phone, Idle, PC, Idle, Fan, TV" are outputted in accordance with the positional order of these electronic devices on the smart socket.

Here, the socket can include a number of independently controlled receptacles, i.e., the on/off of each receptacle can be controlled separately.

In this embodiment, the server can control the smart terminal to output the target type in accordance with a positional rank of the electronic device on the smart socket. In this way, the correspondence between a receptacle and the target type can be obtained and the user can control the smart socket connected with the target electronic device based on the correspondence, thereby avoiding the case where the plug for the target electronic device cannot be identified when a number of target electronic devices are connected to the socket.

In a second scheme, the server can control the smart terminal to output the target type at a corresponding position on a virtual socket image, which is a virtual image of the socket generated by the smart terminal.

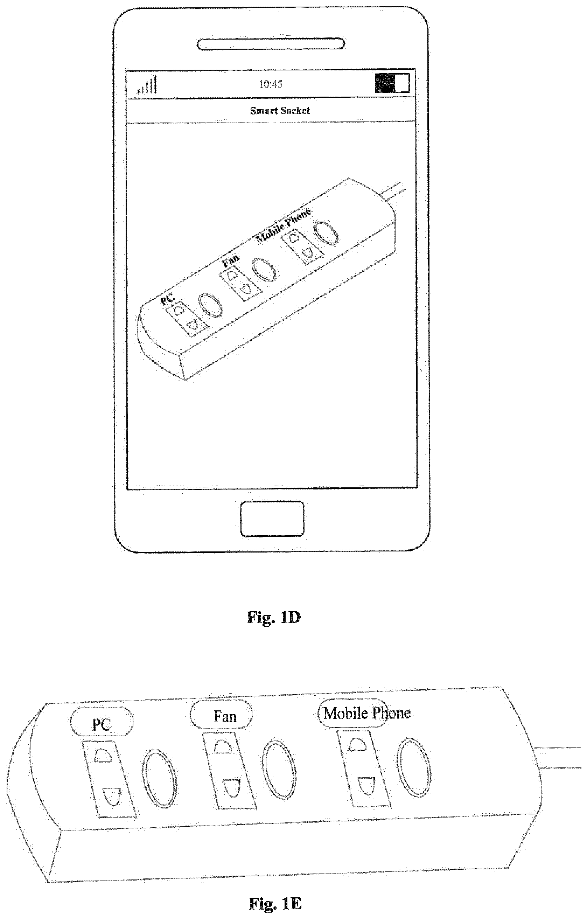

Here, when the smart socket includes a number of receptacles, each receptacle has a unique corresponding position and different receptacles can be distinguished from each other based on their corresponding positions. For example, each receptacle may have its corresponding position located above that receptacle. When there is only one receptacle on the smart socket, the corresponding position can be a position corresponding to the smart socket. Fig. 1D is another schematic diagram showing how to output target types on a smart terminal according to an exemplary embodiment of the present invention. In the example shown in Fig. 1D, the target types, such as "PC", "Fan" and "Mobile Phone", are displayed above the corresponding virtual receptacles. The plugs of the electronic devices connected to the smart socket are omitted in Fig. 1D for simplicity.

It can be seen from the above embodiment that the type of the electronic device connected to each receptacle can be identified clearly.

In a third scheme, the server can control the smart terminal to output the target type at a name position corresponding to the smart socket.

Here, the smart socket can be a socket having only one receptacle.

In the related art, the user may name each smart socket manually as desired, e.g., sequentially as "Socket #1", "Socket #2", "Socket #3", or in accordance with the names of the electronic devices by viewing the connected electronic devices.

In the present invention, once the type of the target electronic device connected to the smart socket has been identified, the target type can be automatically outputted at a name position corresponding to the smart socket by the smart terminal. In this way, it is possible to name the smart socket with an improved naming efficiency. Meanwhile, it is convenient for the user to distinguish between different electronic devices connected to different smart sockets based on the names.

It can be appreciated that the scheme for the smart socket to output the target type is not limited to those described above. Other outputting schemes capable of representing the correspondence between the target type and the smart socket also fall into the protection scope of the present invention and the details thereof will be omitted here.

On the other hand, the server obtains a target power-on state parameter of a target electronic device connected to the smart socket and in a power-on state, identifies a target type of the target electronic device based on the target power-on state parameter, and transmits a correspondence between the target type and the smart socket to the smart socket, so as to output the target type via an output component provided in the smart socket. The output component is provided at a position corresponding to a connection position at which the target electronic device is connected to the smart socket.

Here, there are one-to-one correspondences between the positions of the output components and the connection positions, such that different target electronic devices connected to the smart socket can be distinguished from each other via the output components. Fig. 1E is a schematic diagram showing how to output target types on a smart socket according to an exemplary embodiment of the present invention. In the example shown in Fig. 1E, "PC", "Fan" and "Mobile Phone" are outputted via the output components. Here, the plugs of the electronic devices are omitted in Fig. 1E for simplicity.

In either a scenario where the smart terminal and the smart socket are in short range communication with each other or a scenario where the smart terminal and the smart socket are in remote communication with each other via a server, the method according to the present invention can be used in the smart terminal. The smart terminal can obtain a target power-on state parameter of a target electronic device connected to the smart socket and in a power-on state, identifies a target type of the target electronic device based on the target power-on state parameter, and outputs the target type.

Here, the smart socket is a socket associated with the smart terminal, i.e., there is a binding relationship between them. The smart terminal can control the smart socket. The manner in which the smart terminal directly outputs the target type is similar to the above-described manner in which the server controls the smart socket to output the target type, and the details thereof will be omitted here.

In this embodiment, the smart terminal can identify the type of the target electronic device on the smart socket to determine the target type of the target electronic device connected to the smart socket, and output the correspondence between the smart socket and the target electronic device. In this way, it is convenient for the user to control the on/off state of the smart socket via the smart terminal based on the correspondence between the smart socket and the target electronic device, thereby controlling the power on/off state of the target electronic device. Particularly, when there are a large number of smart sockets, the smart terminal can identify the target electronic devices on the respective smart sockets uniformly. Thus, uniform identification can be performed and it is easy to implement.

In a scenario where the smart terminal and the smart socket are in short range communication with each other, a scenario where the smart terminal and the smart socket are in remote communication with each other via a server, or a scenario where the smart socket does not have a communication module, the method according to the present invention can be used in the smart socket having a processing capability. The smart socket can obtain a target power-on state parameter of a target electronic device connected to the smart socket and in a power-on state, identifies a target type of the target electronic device based on the target power-on state parameter, and outputs the target type.

On one hand, the target type can be outputted via an output component provided in the smart socket. The output component can be provided at a position corresponding to a connection position at which the target electronic device is connected to the smart socket.

In this embodiment, the type of the target electronic device can be displayed on the smart socket to inform the user of the target electronic device plugged into the socket. Particularly, when there are a number of receptacles on the sockets, determining the identity of the target electronic device corresponding to each receptacle allows the user to distinguish between different target electronic devices corresponding to different receptacles conveniently, thereby avoiding operating a receptacle corresponding to an unintended electronic device by mistake due to similarity of plugs of the target electronic devices.

On the other hand, the smart socket can identify the type of the target electronic device connected to it, determine the target type of the target electronic device connected to the smart socket, and then push the correspondence between the smart socket and the target type to smart terminals, so as to output the correspondence between the smart socket and the target type via the smart terminals. In this way, it is convenient for the user to control the on/off state of the smart socket based on the correspondence via the smart terminals, thereby controlling the power on/off state of the target electronic device. Particularly, when there are a large number of smart terminals and a small number of smart sockets, the smart socket can identify the target electronic device connected to it and push the identification result to the respective smart terminals. In this way, resources can be saved.

In the following, examples will be given to explain the steps 101 through 103, respectively.

For the step 101, the target electronic device connected to the smart socket is an electronic device plugged into a receptacle of the smart socket. When the target electronic device is in the power-on state, a target power-on state parameter will be generated. For example, the target power-on state parameter can be one or more of a target electrical power parameter, a target power-on time parameter, a target power-on time length parameter and an electrical power stability parameter.

It can be appreciated that the target power-on state parameter as used herein is a power-on state parameter, which is named so in order to be distinguishable from the power-on state parameter in the correspondence table as described later.

Here, the target electrical power is an electrical power of the target electronic device in the power-on state. The smart socket may have a built-in electrical power meter which can be used to measure the power usage of the target electronic device plugged into the smart socket. On one hand, the smart socket can identify the target type of the target electronic device corresponding to the smart socket based on the obtained electrical power directly. On the other hand, the server or the smart terminal can obtain from the electrical power meter in the smart socket the electrical power of the target electronic device connected to the smart socket and in the power-on state, and identify the target type of the target electronic device corresponding to the smart socket based on the target power-on state parameter.

Here, the target power-on time may be the power-on start time or a power-on time period of the target electronic device. The smart socket may have a built-in timer.

In an optional implementation, the power-on start time can be recorded at the time when the target electronic device on the smart socket is powered on. On one hand, the smart socket can identify the type of the target electronic device on the smart socket based on the obtained power-on start time. On the other hand, the start time can be sent to the server or the smart terminal, such that the server or the smart terminal can identify the type of the target electronic device on the smart socket based on the start time.

In another optional implementation, the power-on start time and the power-on end time can be recorded while the target electronic device on the smart socket is powered on, so as to derive a power-on time period. On one hand, the smart socket can identify the type of the target electronic device on the smart socket based on the obtained power-on time period. On the other hand, the power-on time period can be sent to the server or the smart terminal, such that the server or the smart terminal can identify the type of the target electronic device on the smart socket based on the power-on time period.

Additionally or alternatively, the server or the smart terminal may be provided with a built-in timer. When the target electronic device on the smart socket is powered on, a power-on message is sent to the server or the smart terminal, such that the server and the smart terminal can determine the power-on start time of the target electronic device based on the time at which the power-on message is received. When the target electronic device on the smart socket is powered off, a power-off message is sent to the server or the smart terminal, such that the server and the smart terminal can determine the power-on end time of the target electronic device based on the time at which the power-off message is received. In this way, the power-on start time or the power-on time period can be obtained.

For the electrical power stability parameter, the target electrical power parameter of the target electronic device connected to the smart socket and in the power-on state can be obtained during a predetermined time period, and the electrical power stability parameter of the target electronic device can be determined based on the target electrical power parameter.

The power stability parameter is a function of whether or not power consumption goes above or below predetermined limits during a specific time. If it remains within the limits then the parameter determines that the power is stable. If it goes outside those limits then it is determined not to be stable. An improvement on this the parameter may also be dependent on the length of time power consumption goes above or below predetermined limits.

For the step 102, the target type as used herein is the type of the target electronic device, which is named so in order to be distinguishable from the type in the correspondence table as described later. The target type can be the type of the target electronic device, which is a category to which the target electronic device belongs, such as refrigerator category, TV category, computer category, or the like.

In this step, correspondences between power-on state parameters and respective electronic device types can be pre-established, so as to generate a target correspondence table containing correspondences between the power-on state parameters and the respective electronic device types. Once the target power-on state parameter has been obtained, the target type corresponding to the target power-on state parameter can be determined based on the target correspondence table.

In this embodiment, the target type corresponding to the target power-on state parameter can be determined based on the predetermined correspondences between the power-on state parameters and the respective electronic device types, which is easy to implement.

Several schemes for determining the target type will be given below.

In a first scheme, the target type corresponding to the target electrical power parameter can be determined based on a first correspondence table containing correspondences between electrical power parameters and respective electronic device types.

In this scheme, the target power-on state parameter is a target electrical power parameter and a first correspondence table can be set in advance. The first correspondence table contains correspondences between different electrical power parameters and respective electronic device types. Here the electrical power parameter can be a specific electrical power value or an electrical power range. Each electrical power value or range corresponds to an electronic device type. The correspondence between the electrical power parameters and the respective electronic device types can be obtained. Once the target electrical power parameter has been obtained, it is determined whether the target electrical power parameter matches an electrical power value or lies in an electrical power range in the first correspondence table. If so, the electronic device type corresponding to the electrical power value or the electrical power range can be found and the target type of the target electronic device can be determined as the electronic device type.

It can be seen from the above embodiment that the target electronic device can be identified based on the fact that different target electronic devices have different electrical powers, which is easy to implement.

In a second scheme, the target electrical power parameter of the target electronic device connected to the smart socket and in the power-on state can be obtained during a predetermined time period. The electrical power stability parameter of the target electronic device can be determined based on the target electrical power parameter. The target type corresponding to the electrical power stability parameter can be determined based on a second correspondence table containing correspondences between electrical power stability parameters and respective electronic device types.

Here, the electrical power stability parameter is a parameter representing an electrical power stability state of the target electronic device. The electrical power stability parameter may include a state identifier (e.g., "1" indicating a stable state and "0" indicating an unstable state) and a target electrical power parameter.

In this scheme, the target power-on state parameter is the target electrical power parameter and the predetermined time period can be a predefined time length, such as 5 or 10 minutes. It can be determined whether the target electrical power is stable or not based on the variation of the target electrical power parameter within the predetermined time period. The target electrical power is stable if it remains constant. The target electrical power is unstable if it varies. For example, for home appliances, a target electronic device such as an air conditioner may have its power varying over time in operation.

It can be seen from the above embodiment that the target electronic device can be identified based not only on the fact that different target electronic devices have different electrical powers, but also on the fact that the different target electronic devices have different electrical power stability states, thereby providing an improved identification accuracy. Particularly, when different target electronic devices have the same electrical power but different electrical power stability states, the target type corresponding to the electrical power stability parameter can be determined based on the predetermined second correspondence table.

In a third scheme, the target type corresponding to the target power-on time parameter can be determined based on predetermined correspondences between power-on time parameters and respective electronic device types.

Here, the target power-on state parameter is the target power-on time parameter, which can be a power-on start time or a power-on time period of the target electronic device. For home appliances, different target electronic devices may have different power-on time parameters. For example, when the target power-on time parameter is the power-on time period, a kitchen ventilator may have predetermined power-on time periods of 7:00 to 8:00, 11:00 to 12:00 and 17:30 to 18:30. An electric light may have a predetermined power-on time period of 18:00 to 24:00. The specific time can be set by the user as desired. Based on this, it can be determined whether the obtained power power-on time parameter is among the predetermined power-on time periods, so as to determine the target type of the corresponding target electronic device. When the target power-on time parameter is the power-on start time, a kitchen ventilator may have predetermined power-on start time of 7:00 to 7:30, 11:00 to 11:30 and 17:30 to 18:00. Based on this, it can be determined whether the obtained power power-on time parameter is among the predetermined power-on start times, so as to determine the target type of the corresponding target electronic device.

It can be seen from the above embodiment that, since different target electronic devices may have different target power-on time parameters, the target type of the target electronic device connected to the smart socket can be determined based on the target power-on time parameter, which is easy to implement.

In a fourth scheme, the target type corresponding to the target power-on time length parameter can be determined based on predetermined correspondences between power-on time length parameters and respective electronic device types.

Here, the target power-on state parameter is the target power-on time length parameter. The target power-on time length parameter indicates a total power-on time length of the target electronic device. For home appliances, different electrical devices may have different power-on time length parameters and the target electronic device can be determined based on its power-on time length. For example, a refrigerator is typically always in the power-on state. When the target electronic device is always in the power-on state, the target type can be determined as a refrigerator.

It can be seen from the above embodiment that, since different target electronic devices may have different power-on time length parameters, the target type of the target electronic device connected to the smart socket can be determined based on the power-on time length parameter, which is easy to implement.

It can be appreciated that the above schemes can be combined, such that the target type of the target electronic device connected to the smart socket can be identified based on multiple target power-on state parameters, thereby improving the identification accuracy. In the following, some combinations will be explained by way of example.

In a first combination, the target type corresponding to the target electrical power parameter and the target power-on time parameter can be determined based on a predetermined third correspondence table containing correspondences among electrical power parameters, power-on time parameters and respective electronic device types.

Here, the target power-on state parameter includes the target electrical power parameter and the target power-on time parameter. The third correspondence table contains the correspondences among the electrical power parameters, the power-on time parameters and the respective electronic device types. Once the electrical power parameter and the power-on time parameter have been determined, the target type of the target electronic device can be determined accordingly.

It can be seen from the above embodiment that the target electronic device can be identified based not only on the fact that different target electronic devices have different electrical powers, but also on the fact that the different target electronic devices have different target power-on time parameters, thereby providing an improved identification accuracy. Particularly, when different target electronic devices have the same electrical power but different target power-on time parameters, or when different target electronic devices have the same target power-on time parameter but different target electrical power parameters, the target type corresponding to the target electrical power parameter and the target power-on time parameter can be determined based on the predetermined third correspondence table.

In a second combination, the target electrical power parameter of the target electronic device connected to the smart socket and in the power-on state can be obtained during a predetermined time period. The electrical power stability parameter of the target electronic device can be determined based on the target electrical power parameter. The target type corresponding to the electrical power stability parameter and the target power-on time parameter can be determined based on a fourth correspondence table containing correspondences among electrical power stability parameters, target power-on time parameters and respective electronic device types.

Here, the target power-on state parameter includes the electrical power stability parameter and the target power-on time parameter. The fourth correspondence table contains the correspondences among the electrical power stability parameters, the power-on time parameters and the respective electronic device types. Once the electrical power stability parameter and the power-on time parameter have been determined, the corresponding target type of the target electronic device can be determined accordingly.

In this embodiment, the type of the target electronic device can be identified based on the electrical power stability parameter and the power-on time parameter, such that the identification accuracy can be further improved.

In a third combination, the target type corresponding to the target electrical power parameter and the target power-on time length parameter can be determined based on a predetermined fifth correspondence table containing correspondences among electrical power parameters, power-on time length parameters and respective electronic device types.

Here, the target power-on state parameter includes the target electrical power parameter and the target power-on time length parameter. The fifth correspondence table contains the correspondences among the electrical power parameters, the power-on time length parameters and the respective electronic device types. Once the electrical power parameter and the power-on time length parameter have been determined, the corresponding target type of the target electronic device can be determined accordingly.

It can be seen from the above embodiment that the target electronic device can be identified based not only on the fact that different target electronic devices have different electrical power parameters, but also on the fact that the different target electronic devices may have different target power-on time length parameters, thereby providing an improved identification accuracy. Particularly, when different target electronic devices have the same electrical power but different target power-on time length parameters, or when different target electronic devices have the same target power-on time length parameter but different target electrical power parameters, the target type corresponding to the target electrical power parameter and the target power-on time length parameter can be determined based on the predetermined fifth correspondence table.

For the step 103, there are various schemes for outputting the target type, including e.g., visual output or audio output. On one hand, when there is a one-to-one correspondence between the output position and the smart socket, the target type can be outputted directly. For example, the target type can be outputted via an output component provided in the smart socket, the output component being provided at a position corresponding to a connection position at which the target electronic device is connected to the smart socket. On the other hand, when the relationship between the output position and the smart socket is unknown, the correspondence between the target type and the smart socket can be outputted.

In an optional implementation, the step 103 may include: outputting prompt information for confirming the target type; detecting a confirmation instruction and a modification instruction for the prompt information; outputting the target type in response to detecting the confirmation instruction; and outputting a modified target type in response to detecting the modification instruction.

In order to avoid erroneous automatic identification of the target type of the target electronic device connected to the smart socket, prompt information can be outputted for confirming whether the target type is correct or not. Fig. IF is a schematic diagram showing a prompt interface according to an embodiment of the present invention. As shown in Fig. IF, a prompt box can pop up on a screen to inform the user of the target type of the target electronic device connected to the smart socket, e.g., "The target electronic device corresponding to the smart socket is a refrigerator." A "Confirm" button and a "Modify" button are also displayed for the user to confirm or modify the information. A confirmation instruction or a modification instruction is received on the interface where the prompt information is displayed. The target type can be outputted in response to the confirmation instruction, or a modified target type can be outputted in response to the modification instruction.

In the present invention, the target type of the target electronic device corresponding to the smart socket can be further confirmed by means of human-machine interaction. Further, when multiple target types are determined for one single receptacle in the step 102, a number of reference target types can be provided for selection by the user, so as to avoid waste of user's time spent in determining the type of the target electronic device from a large number of electronic devices.

Some application examples will be given herein for explanation. For example, when the server detects that a target electronic device connected to the receptacle has an electrical power of 3W, is typically used in the night and has a stable power, the server can push "lamp" to the user for confirmation. When the server detects that a target electronic device connected to the receptacle has an electrical power of 150W and operates constantly, the server can push "refrigerator" to the user for confirmation. When the server detects that a target electronic device connected to the receptacle has an electrical power of 1200W and has a power that varies frequently over a certain range, the server can push "air conditioner" to the user for confirmation.

Correspondingly to the above embodiments of the method for identifying a type of an electronic device on a smart socket, embodiments of an apparatus for identifying a type of an electronic device on a smart socket and a terminal where the apparatus can be applied are also provided.

Fig. 2 is a block diagram of an apparatus for identifying a type of an electronic device on a smart socket according to an exemplary embodiment of the present invention. As shown in Fig. 2, the apparatus includes a parameter obtaining unit 21, a type identification unit 22 and a type output unit 23.

Here, the parameter obtaining unit 21 is configured to obtain a target power-on state parameter of a target electronic device connected to the smart socket and in a power-on state.

The type identification unit 22 is configured to identify a target type of the target electronic device based on the target power-on state parameter obtained by the parameter obtaining unit.

The type output unit 23 is configured to output the target type identified by the type identification unit.

In the above embodiment, a target power-on state parameter of a target electronic device connected to the smart socket and in a power-on state is obtained. A target type of the target electronic device is identified based on the target power-on state parameter. Then, the target type is outputted. In this way, a user can obtain a correspondence between the smart socket and the target electronic device based on the outputted target type information and control the smart socket connected with the target electronic device based on the correspondence, so as to avoid controlling a socket corresponding to another electronic device by mistake due to lack of knowledge about the correspondence between the target electronic device and the smart socket.

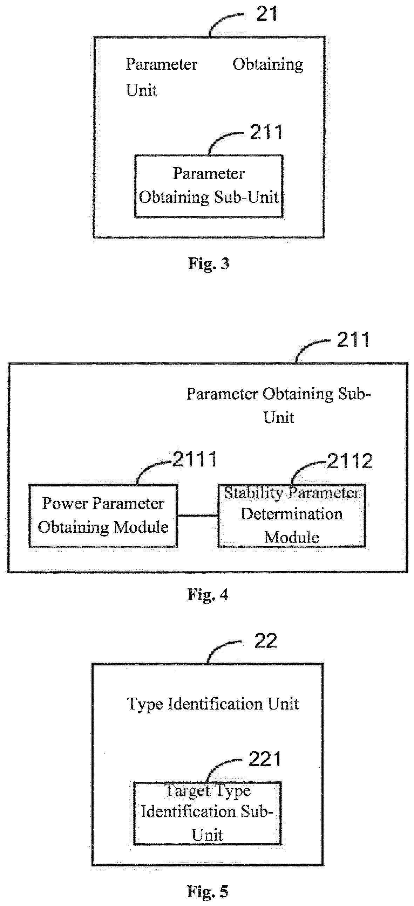

Fig. 3 is a block diagram of another apparatus for identifying a type of an electronic device on a smart socket according to an exemplary embodiment of the present invention. Further to the embodiment shown in Fig. 2, in this embodiment, the parameter obtaining unit 21 includes a parameter obtaining sub-unit 211.

Here, the parameter obtaining sub-unit 211 is configured to obtain at least one of the following target power-on state parameters of the target electronic device connected to the smart socket and in the power-on state: a target electrical power parameter, a target power-on time parameter, a target power-on time length parameter and an electrical power stability parameter.

In the above embodiment, the target power-on state parameter can be one or more of a target electrical power parameter, a target power-on time parameter, a target power-on time length parameter and an electrical power stability parameter. The target type of the target electronic device corresponding to the smart socket can be identified automatically depending on different target power-on state parameters, so as to identify the target electronic device. The accuracy of identification can be improved when various parameters are used in combination for identification.

Fig. 4 is a block diagram of another apparatus for identifying a type of an electronic device on a smart socket according to an exemplary embodiment of the present invention. Further to the embodiment shown in Fig. 3, in this embodiment, the parameter obtaining sub-unit 211 includes a power parameter obtaining module 2111 and a stability parameter determination module 2112.

Here, the power parameter obtaining module 2111 is configured to obtain the target electrical power parameter of the target electronic device connected to the smart socket and in the power-on state during a predetermined time period.

The stability parameter determination module 2112 is configured to determine the electrical power stability parameter of the target electronic device based on the target electrical power parameter obtained by the power parameter obtaining module.

In the above embodiment, the target electrical power parameter of the target electronic device connected to the smart socket and in the power-on state can be obtained during a predetermined time period. The electrical power stability parameter of the target electronic device can be determined based on the target electrical power parameter. This is easy to implement.

Fig. 5 is a block diagram of another apparatus for identifying a type of an electronic device on a smart socket according to an exemplary embodiment of the present invention. Further to the embodiment shown in Fig. 2, in this embodiment, the type identification unit 22 includes a target type identification sub-unit 221.

The target type identification sub-unit 221 is configured to determine the target type corresponding to the target power-on state parameter obtained by the parameter obtaining unit based on a target correspondence table containing correspondences between power-on state parameters and respective electronic device types.

In the above embodiment, the target type corresponding to the target power-on state parameter can be determined based on predetermined correspondences between power-on state parameters and respective electronic device types, which is easy to implement.

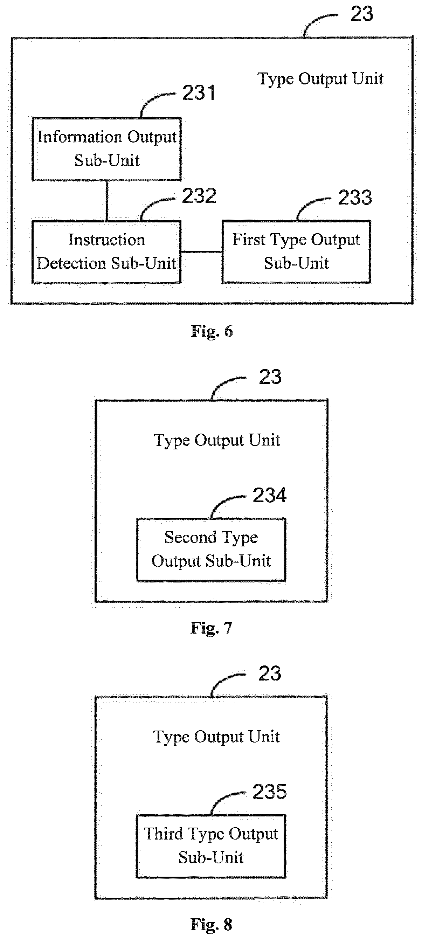

Fig. 6 is a block diagram of another apparatus for identifying a type of an electronic device on a smart socket according to an exemplary embodiment of the present invention. Further to the embodiment shown in Fig. 2, in this embodiment, the type output unit 23 includes an information output sub-unit 231, an instruction detection sub-unit 232 and a first type output sub-unit 233.

Here, the information output sub-unit 231 is configured to output prompt information for confirming the target type identified by the type identification unit.

The instruction detection sub-unit 232 is configured to detect a confirmation instruction and a modification instruction for the prompt information output by the information output sub-unit.

The first type output sub-unit 233 is configured to output the target type when the confirmation instruction is detected or to output a modified target type when the modification instruction is detected.

In the above embodiment, the target type of the target electronic device corresponding to the smart socket can be further confirmed by means of human-machine interaction. In this way, it is possible to improve the accuracy of the identification and avoid erroneous automatic identification of the target type.

Fig. 7 is a block diagram of another apparatus for identifying a type of an electronic device on a smart socket according to an exemplary embodiment of the present invention. Further to the embodiment shown in Fig. 2, in this embodiment, the type output unit 23 includes a second type output sub-unit 234.

Here, the second type output sub-unit 234 is configured to output the target type identified by the type identification unit via an output component provided in the smart socket. The output component is provided at a position corresponding to a connection position at which the target electronic device is connected to the smart socket.

In the above embodiment, since there are one-to-one correspondences between the positions of the output components and the connection positions, the target type outputted by an output component of the smart socket clearly shows the correspondence between the target type and a receptacle in the smart socket, making it convenient for the user to operate the smart socket.

Fig. 8 is a block diagram of another apparatus for identifying a type of an electronic device on a smart socket according to an exemplary embodiment of the present invention. Further to the embodiment shown in Fig. 2, in this embodiment, the type output unit 23 includes a third type output sub-unit 235.

Here, the third type output sub-unit 235 is configured to output the target type identified by the type identification unit via a smart terminal that is a control terminal of the smart socket.

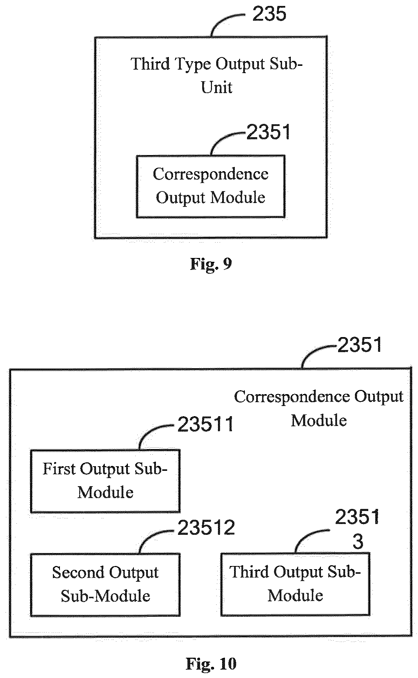

Fig. 9 is a block diagram of another apparatus for identifying a type of an electronic device on a smart socket according to an exemplary embodiment of the present invention. Further to the embodiment shown in Fig. 8, in this embodiment, the third type output sub-unit 235 includes a correspondence output module 2351.

Here, the correspondence output module 2351 is configured to control the smart terminal to output a correspondence between the target type and the smart socket.

In the above embodiment, a smart terminal can output the correspondence between the target type and the smart socket, which clearly shows the correspondence between the target type and a receptacle in the smart socket. This is convenient for the user to control the smart socket using the smart terminal.

Fig. 10 is a block diagram of another apparatus for identifying a type of an electronic device on a smart socket according to an exemplary embodiment of the present invention. Further to the embodiment shown in Fig. 9, in this embodiment, the correspondence output module 2351 includes at least one of the following sub-modules. For the purpose of clear illustration, Fig. 10 shows all sub-modules that can be included in the correspondence output module 2351: a first output sub-module 23511, a second output sub-module 23512 and a third output sub-module 23513.

Here, the first output sub-module 23511 is configured to control the smart terminal to output the target type in accordance with a positional rank of the electronic device on the smart socket.

The second output sub-module 23512 is configured to control the smart terminal to output the target type at a corresponding position on a virtual socket image, which is a virtual image of the smart socket generated by the smart terminal.

The third output sub-module 23513 is configured to control the smart terminal to output the target type at a name position corresponding to the smart socket.

In the present invention, the smart terminal can output the target type in accordance with a positional rank of the electronic device on the smart socket. In this way, the correspondence between a receptacle and the target type can be obtained and the user can control the smart socket connected with the target electronic device based on the correspondence, thereby avoiding the case where the plug for the target electronic device cannot be identified when a number of target electronic devices are connected to the socket. In the present invention, the smart terminal can output the target type at a corresponding position on a virtual socket image. In this way, the correspondence between the target type and a receptacle in the smart socket can be clearly shown, making it convenient for the user to control the smart socket using the smart terminal. In the present invention, once the type of the target electronic device connected to the smart socket has been identified, the target type can be automatically outputted at a name position corresponding to the smart socket by the smart terminal. In this way, it is possible to name the smart socket with an improved naming efficiency. Meanwhile, it is convenient for the user to distinguish between different electronic devices connected to different smart sockets based on the names.

Accordingly, an apparatus for identifying a type of an electronic device on a smart socket is also provided. The apparatus includes a processor and a memory storing instructions executable by the processor. The processor is configured to: obtain a target power-on state parameter of a target electronic device connected to the smart socket and in a power-on state; identify a target type of the target electronic device based on the target power-on state parameter; and output the target type.

For the implementation of the functions of the respective units in the above apparatus, reference can be made to the implementation of the corresponding steps in the above method and the details thereof will be omitted here.

For the apparatus embodiment, reference can be made to the corresponding description of the method embodiment since it substantially corresponds to the method embodiment. The apparatus embodiment as described above is illustrative only. Those units described as discrete components may or may not be physically separated. Those components shown as units may or may not be physical units, i.e., they can either be co-located, or distributed over a number of network elements. Some or all of the modules can be selected as desired to achieve the object of the present invention, as can be understood and implemented by those skilled in the art without any inventive efforts.

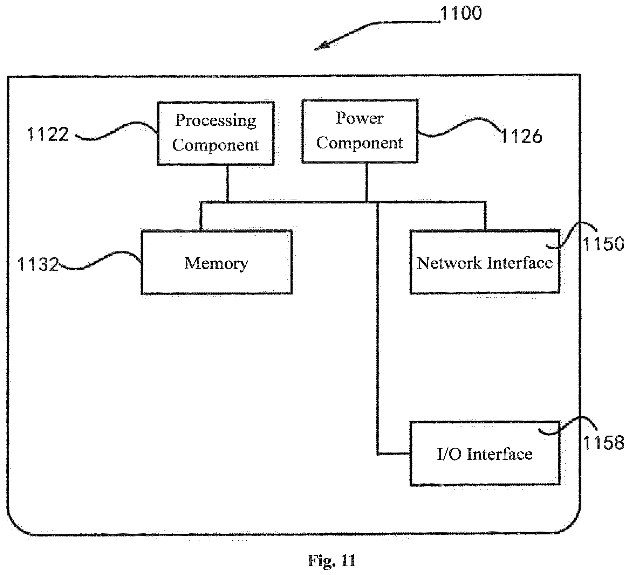

Fig. 11 is a block diagram of an apparatus 1100 for identifying a type of an electronic device on a smart socket according to an exemplary embodiment of the present invention. As shown in Fig. 11, the apparatus 1100 can be provided as e.g., a server. Referring to Fig. 11, the apparatus 1100 includes: a processing component 1122, which further includes one or more processors; and storage resources represented by a memory 1132, for storing instructions, i.e., applications, executable by the processing component 1122. The applications stored in the memory 1132 may include one or more modules each corresponding to a set of instructions. Further, the processing component 1122 is configured to execute instructions to perform the above method for identifying a type of an electronic device on a smart socket.

The apparatus 1100 can further include: a power component 1126 configured to perform power management for the apparatus 1100, a wired or wireless network interface 1150 configured to connect the apparatus 1100 to a network, and an input/output (IO) interface 1158. The apparatus 1100 can operate based on an operating system stored in the memory 1132, e.g., Windows Server™, MAC OS X™, Unix™, Linux™, FreeBSD™, or the like.

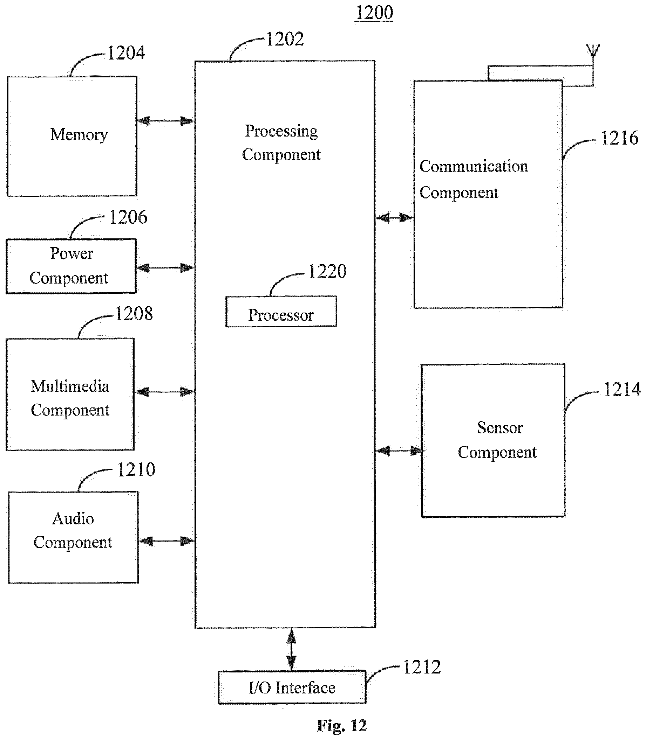

Fig. 12 is a block diagram showing another apparatus 1200 for identifying a type of an electronic device on a smart socket according to an exemplary embodiment. For example, the apparatus 1200 may be a mobile phone with a routing function, a computer, a digital broadcast terminal, a messaging device, a gaming console, a tablet, a medical device, exercise equipment, a personal digital assistant or the like.

Referring to Fig. 12, the apparatus 1200 may include one or more of the following components: a processing component 1202, a memory 1204, a power supply component 1206, a multimedia component 1208, an audio component 1210, an input/output (I/O) interface 1212, a sensor component 1214 and a communication component 1216.

The processing component 1202 generally controls the overall operations of the apparatus 1200, for example, display, phone call, data communication, camera operation and record operation. The processing component 1202 may include one or more processors 1220 to execute instructions to perform all or part of the steps in the above described methods. In addition, the processing component 1202 may include one or more modules to facilitate the interaction between the processing component 1202 and other components. For example, the processing component 1202 may include a multimedia module to facilitate the interaction between the processing component 1208 and the processing component 1202.

The memory 1204 is configured to store various types of data to support the operation performed on the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1206 provides power to various components of the apparatus 1200. The power supply component 1206 may include a power supply management system, one or more power sources, and any other components associated with the generation, management, and distribution of power in the apparatus 1200.

The multimedia component 1208 includes a screen providing an output interface between the apparatus 1200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive external multimedia data while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, a microwave sensor or a temperature sensor.

The communication component 1216 is configured to facilitate wired or wireless communication between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast related information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 of the apparatus 1200, for performing the above-described methods. For example, the non-transitory computer-readable storage medium may be a ROM, a RAM, a CD-ROM, a magnetic tape, a floppy disc, an optical data storage device, and the like.

When executed by the processor of a terminal, the instructions in the non-transitory computer-readable storage medium cause the terminal to perform a method for identifying a type of an electronic device on a smart socket. The method comprises: obtaining a target power-on state parameter of a target electronic device connected to the smart socket and in a power-on state; identifying a target type of the target electronic device based on the target power-on state parameter; and outputting the target type.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the appended claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

The aforementioned embodiments are just preferred embodiments of the present invention, and are not intended to limit the present invention.

## Claims

1. A method for identifying a type of an electronic device on a smart socket, the method comprising:
obtaining (101) a target power-on state parameter of a target electronic device connected to the smart socket and in a power-on state, wherein the target power-on state parameter is an electrical power stability parameter which is a function of whether or not power consumption of the target electronic device goes above or below predetermined limits during a specific time;
identifying (102) a target type of the target electronic device based on the target power-on state parameter, wherein the target type corresponding to the target power-on state parameter is identified based on a target correspondence table, and the target correspondence table contains correspondences between power-on state parameters and respective electronic device types; and
outputting (103) the target type,
wherein the smart socket has a built-in electrical power meter used to measure power usage of the target electronic device plugged into the smart socket, and
wherein said obtaining the electrical power stability parameter of the target electronic device connected to the smart socket and in the power-on state comprises:
obtaining, during a predetermined time period, a target electrical power parameter of the target electronic device connected to the smart socket and in the power-on state; and
determining the electrical power stability parameter of the target electronic device based on the target electrical power parameter.

2. The method of claim 1, **characterized in that** said outputting (103) the target type comprises:
outputting prompt information for confirming the target type;
detecting a confirmation instruction and a modification instruction for the prompt information;
outputting the target type in response to detecting the confirmation instruction; and
outputting a modified target type in response to detecting the modification instruction.

3. The method of claim 1 or 2, **characterized in that** said outputting (103) the target type comprises:
outputting the target type via an output component provided in the smart socket, the output component being provided at a position corresponding to a connection position at which the target electronic device is connected to the smart socket.

4. The method of claim 1 or 2, **characterized in that** said outputting (103) the target type comprises:
outputting the target type via a smart terminal, the smart terminal being a control terminal of the smart socket.

5. The method of claim 2, **characterized in that** said outputting the target type via the smart terminal comprises:
controlling the smart terminal to output a correspondence between the target type and the smart socket.

6. The method of claim 5, **characterized in that** said controlling the smart terminal to output the correspondence between the target type and the smart socket comprises at least one of:
controlling the smart terminal to output the target type in accordance with a positional rank of the electronic device on the smart socket;
controlling the smart terminal to output the target type at a corresponding position on a virtual socket image, which is a virtual image of the smart socket generated by the smart terminal; and
controlling the smart terminal to output the target type at a name position corresponding to the smart socket.

7. An apparatus for identifying a type of an electronic device on a smart socket, the apparatus comprising:
a parameter obtaining unit (21) configured to obtain a target power-on state parameter of a target electronic device connected to the smart socket and in a power-on state, wherein the target power on state parameter is an electrical power stability parameter which is a function of whether or not power consumption of the target electronic device goes above or below predetermined limits during a specific time;
a type identification unit (22) configured to identify a target type of the target electronic device based on the target power-on state parameter obtained by the parameter obtaining unit (21) wherein the target type corresponding to the target power-on state parameter is identified based on a target correspondence table, and the target correspondence table contains correspondences between power-on state parameters and respective electronic device types; and
a type output unit (23) configured to output the target type identified by the type identification unit (22),
wherein the smart socket has a built-in electrical power meter used to measure power usage of the target electronic device plugged into the smart socket, and
wherein the parameter obtaining unit (21) further comprises:
a power parameter obtaining module (2111) configured to obtain, during a predetermined time period, a target electrical power parameter of the target electronic device connected to the smart socket and in the power-on state; and
a stability parameter determination module (2112) configured to determine the electrical power stability parameter of the target electronic device based on the target electrical power parameter.

8. A computer program comprising instructions which when the program is executed by a computer, cause the computer to carry out all the steps of the method according to any of claims 1 to 6.

## Patentansprüche

1. Verfahren zum Identifizieren eines Typs eines elektronischen Geräts auf einem Smart Socket, wobei das Verfahren Folgendes beinhaltet:
Einholen (101) eines Ziel-Einschaltzustandsparameters eines elektronischen Zielgeräts, das an dem Smart Socket angeschlossen und in einem Einschaltzustand ist, wobei der Ziel-Einschaltzustandsparameter ein Stromstabilitätsparameter ist, der davon abhängig ist, ob der Verbrauch des elektronischen Zielgeräts während einer bestimmten Zeit die vorbestimmten Grenzen über- oder unterschreitet oder nicht;
Identifizieren (102) eines Zieltyps des elektronischen Zielgeräts auf der Basis des Ziel-Einschaltzustandsparameters, wobei der Zieltyp entsprechend dem Ziel-Einschaltzustandsparameter auf der Basis einer Zielkorrespondenztabelle identifiziert wird und die Zielkorrespondenztabelle Korrespondenzen zwischen Einschaltzustandsparametern und jeweiligen elektronischen Gerätetypen enthält; und
Ausgeben (103) des Zieltyps,
wobei der Smart Socket ein eingebautes elektrisches Strommessgerät hat, das zum Messen des Stromverbrauchs des in den Smart Socket eingesteckten elektronischen Zielgeräts benutzt wird, und
wobei das genannte Einholen des Stromstabilitätsparameters des elektronischen Zielgeräts, das am Smart Socket angeschlossen und im Einschaltzustand ist, Folgendes beinhaltet:
Einholen, während einer vorbestimmten Zeitperiode, eines Ziel-Stromparameters des elektronischen Zielgeräts, das am Smart Socket angeschlossen und im Einschaltzustand ist; und
Bestimmen des Stromstabilitätsparameters des elektronischen Zielgeräts auf der Basis des Zielstromparameters.

2. Verfahren nach Anspruch 1, **dadurch gekennzeichnet, dass** das genannte Ausgeben (103) des Zieltyps Folgendes beinhaltet:
Ausgeben von Prompt-Informationen zum Bestätigen des Zieltyps;
Erkennen eines Bestätigungsbefehls und eines Modifikationsbefehls für die Prompt-Informationen;
Ausgeben des Zieltyps als Reaktion auf die Erkennung des Bestätigungsbefehls; und
Ausgeben eines modifizierten Zieltyps als Reaktion auf die Erkennung des Modifikationsbefehls.

3. Verfahren nach Anspruch 1 oder 2, **dadurch gekennzeichnet, dass** das genannte Ausgeben (103) des Zieltyps Folgendes beinhaltet:
Ausgeben des Zieltyps über eine im Smart Socket bereitgestellte Ausgabekomponente, wobei die Ausgabekomponente an einer Position entsprechend einer Verbindungsposition vorgesehen ist, in der das elektronische Zielgerät am Smart Socket angeschlossen ist.

4. Verfahren nach Anspruch 1 oder 2, **dadurch gekennzeichnet, dass** das genannte Ausgeben (103) des Zieltyps Folgendes beinhaltet:
Ausgeben des Zieltyps über ein Smart Terminal, wobei das Smart Terminal ein Steuerterminal des Smart Socket ist.

5. Verfahren nach Anspruch 2, **dadurch gekennzeichnet, dass** das genannte Ausgeben des Zieltyps über das Smart Terminal Folgendes beinhaltet:
Steuern des Smart Terminals zum Ausgeben einer Korrespondenz zwischen dem Zieltyp und dem Smart Socket.

6. Verfahren nach Anspruch 5, **dadurch gekennzeichnet, dass** das genannte Steuern des Smart Terminals zum Ausgeben der Korrespondenz zwischen dem Zieltyp und dem Smart Socket wenigstens eines der Folgenden beinhaltet:
Steuern des Smart Terminals zum Ausgeben des Zieltyps gemäß einem Positionsrang des elektronischen Geräts an dem Smart Socket;
Steuern des Smart Terminals zum Ausgeben des Zieltyps in einer entsprechenden Position auf einem virtuellen Socket-Bild, das ein virtuelles Bild des Smart Socket ist, erzeugt durch das Smart Terminal; und
Steuern des Smart Terminals zum Ausgeben des Zieltyps in einer Namensposition entsprechend dem Smart Socket.

7. Vorrichtung zum Identifizieren eines Typs eines elektronischen Geräts auf einem Smart Socket, wobei die Vorrichtung Folgendes umfasst:
eine Parametereinholeinheit (21), konfiguriert zum Einholen eines Ziel-Einschaltzustandsparameters eines elektronischen Zielgeräts, das am Smart Socket angeschlossen und in einem Einschaltzustand ist, wobei der Ziel-Einschaltzustandsparameter ein Stromstabilitätsparameter ist, der davon abhängig ist, ob Stromverbrauch des elektronischen Zielgeräts während einer bestimmten Zeit vorbestimmte Grenzen über- oder unterschreitet;
eine Typenidentifikationseinheit (22), konfiguriert zum Identifizieren eines Zieltyps des elektronischen Zielgeräts auf der Basis des von der Parametereinholeinheit (21) eingeholten Ziel-Einschaltzustandsparameters, wobei der Zieltyp entsprechend dem Ziel-Einschaltzustandsparameter auf der Basis einer Zielkorrespondenztabelle identifiziert ist und die Zielkorrespondenztabelle Korrespondenzen zwischen Einschaltzustandsparametern und jeweiligen elektronischen Gerätetypen enthält; und
eine Typenausgabeeinheit (23), konfiguriert zum Ausgeben des von der Typenidentifikationseinheit (22) identifizierten Zieltyps,
wobei der Smart Socket ein eingebautes Strommessgerät hat, das zum Messen des Stromverbrauchs des in den Smart Socket eingesteckten elektronischen Zielgeräts benutzt wird, und
wobei die Parametereinholeinheit (21) ferner Folgendes umfasst:
ein Stromparametereinholmodul (2111), konfiguriert zum Einholen, während einer vorbestimmten Zeitperiode, eines Ziel-Stromparameters des elektronischen Zielgeräts, das am Smart Socket angeschlossen und im Einschaltzustand ist; und
ein Stabilitätsparameterbestimmungsmodul (2112), konfiguriert zum Bestimmen des Stromstabilitätsparameters des elektronischen Zielgeräts auf der Basis des Ziel-Stromparameters.

8. Computerprogramm, das Befehle umfasst, die bei Ausführung des Programms durch einen Computer bewirken, dass der Computer alle Schritte des Verfahrens nach einem der Ansprüche 1 bis 6 durchführt.

## Revendications

1. Procédé d'identification d'un type de dispositif électronique sur une prise intelligente, le procédé comprenant :
l'obtention (101) d'un paramètre d'état de mise sous tension cible d'un dispositif électronique cible connecté à la prise intelligente et dans un état sous tension, le paramètre d'état de mise sous tension cible étant un paramètre de stabilité de puissance électrique qui est fonction d'une consommation électrique du dispositif électronique cible supérieure ou inférieure à des limites prédéterminées durant un temps spécifique ;
l'identification (102) d'un type cible du dispositif électronique cible en fonction du paramètre d'état de mise sous tension cible, le type cible correspondant au paramètre d'état de mise sous tension cible étant identifié d'après une table de correspondances cible, et la table de correspondances cible contenant des correspondances entre des paramètres d'état de mise sous tension et des types de dispositifs électroniques respectifs ; et
la production en sortie (103) du type cible,
dans lequel la prise intelligente comporte un compteur de puissance électrique intégré servant à mesurer la consommation électrique du dispositif électronique cible branché à la prise intelligente, et
dans lequel ladite obtention du paramètre de stabilité de puissance électrique du dispositif électronique cible connecté à la prise intelligente et dans l'état sous tension comprend :
l'obtention, durant une période de temps prédéterminée, d'un paramètre de puissance électrique cible du dispositif électronique cible connecté à la prise intelligente et dans l'état sous tension ; et
la détermination du paramètre de stabilité de puissance électrique du dispositif électronique cible en fonction du paramètre de puissance électrique cible.

2. Procédé selon la revendication 1, **caractérisé en ce que** ladite production en sortie (103) du type cible comprend :
la production en sortie d'informations d'invite pour confirmer le type cible ;
la détection d'une instruction de confirmation et d'une instruction de modification des informations d'invite ;
la production en sortie du type cible en réponse à la détection de l'instruction de confirmation ;
et
la production en sortie d'un type cible modifié en réponse à la détection de l'instruction de modification.

3. Procédé selon la revendication 1 ou 2, **caractérisé en ce que** ladite production en sortie (103) du type cible comprend :
la production en sortie du type cible par l'intermédiaire d'un composant de sortie fourni dans la prise intelligente, le composant de sortie étant placé à une position correspondant à une position de connexion à laquelle le dispositif électronique ciblé est connecté à la prise intelligente.

4. Procédé selon la revendication 1 ou 2, **caractérisé en ce que** ladite production en sortie (103) du type cible comprend :
la production en sortie du type cible par l'intermédiaire d'un terminal intelligent, le terminal intelligent étant un terminal de commande de la prise intelligente.

5. Procédé selon la revendication 2, **caractérisé en ce que** ladite production en sortie du type cible par l'intermédiaire du terminal intelligent comprend :
la commande du terminal intelligent pour produire en sortie une correspondance entre le type cible et la prise intelligente.

6. Procédé selon la revendication 5, **caractérisé en ce que** ladite commande du terminal intelligent pour produire en sortie la correspondance entre le type cible et la prise intelligente comprend au moins une :
d'une commande du terminal intelligent pour produire en sortie le type cible conformément à un rang positionnel du dispositif électronique sur la prise intelligente;
d'une commande du terminal intelligent pour produire en sortie le type cible à une position correspondante sur une image de prise virtuelle, laquelle est une image virtuelle de la prise intelligente générée par le terminal intelligent ; et
d'une commande du terminal intelligent pour produire en sortie le type cible à une position nommée correspondant à la prise intelligente.

7. Appareil d'identification d'un type de dispositif électronique sur une prise intelligente, l'appareil comprenant :
une unité d'obtention de paramètre (21) configurée pour obtenir un paramètre d'état de mise sous tension cible d'un dispositif électronique cible connecté à la prise intelligente et dans un état sous tension, le paramètre d'état de mise sous tension cible étant un paramètre de stabilité de puissance électrique qui est fonction d'une consommation électrique du dispositif électronique cible supérieure ou inférieure à des limites prédéterminées durant un temps spécifique
une unité d'identification de type (22) configurée pour identifier un type cible du dispositif électronique cible en fonction du paramètre d'état de mise sous tension cible obtenu par l'unité d'obtention de paramètre (21), le type cible correspondant au paramètre d'état de mise sous tension cible étant identifié d'après une table de correspondances cible, et la table de correspondances cible contenant des correspondances entre des paramètres d'état de mise sous tension et des types de dispositifs électroniques respectifs ; et
une unité de production en sortie de type (23) configurée pour produire en sortie le type cible identifié par l'unité d'identification de type (22),
dans lequel la prise intelligente comporte un compteur de puissance électrique intégré servant à mesurer la consommation électrique du dispositif électronique cible branché à la prise intelligente, et
dans lequel l'unité d'obtention de paramètre (21) comprend en outre :
un module d'obtention de paramètre de puissance (2111) configuré pour obtenir, durant une période de temps prédéterminée, un paramètre de puissance électrique cible du dispositif électronique cible connecté à la prise intelligente et dans l'état sous tension; et
un module de détermination de paramètre de stabilité (2112) configuré pour déterminer le paramètre de stabilité de puissance électrique du dispositif électronique cible en fonction du paramètre de puissance électrique cible.

8. Programme informatique comprenant des instructions qui, quand le programme est exécuté par un ordinateur, amènent l'ordinateur à mettre en oeuvre toutes les étapes du procédé selon l'une quelconque des revendications 1 à 6.
